# DEMANDE DE BREVET EUROPEEN

(11) **EP 4 752 065 A1**
(43) Date de publication de la demande: **03.06.2026**
(21) Numéro de dépôt: 25218564.0
(22) Date de dépôt: 26.11.2025
(51) Int. Cl.: B64D 27/40, B64C 3/32

(54) **ENSEMBLE POUR AÉRONEF COMPORTANT DES MOYENS POUR FIXER UNE AILE À UN MÂT RÉACTEUR**

(30) Priorité: 27.11.2024 FR 2413067
(71) Demandeur: AIRBUS OPERATIONS (S.A.S.), 31060 Toulouse (FR)
(72) Inventeur: GUENEAU, Germain, 31060 TOULOUSE (FR); COMBES, Pierre-Antoine, 31060 TOULOUSE (FR); DE NICOLA, Marc, 31060 TOULOUSE (FR)
(74) Mandataire: Cabinet Le Guen Maillet

(57) **Abrégé**

L'invention concerne un ensemble (1) pour un aéronef et comportant deux ferrures supérieures (104b-c) fixées à une structure (104a) de l'aile, une ferrure inférieure (104d) fixée à la structure (104a) de l'aile, et un mât réacteur (106) comportant un panneau latéral tribord (208a), un panneau latéral bâbord (208b) et un longeron inférieur (206), où chaque panneau latéral (208a-b) est monté articulé sur la ferrure supérieure (104b-c) qui est du même côté par un premier point d'articulation (209a-b), et où le longeron inférieur (206) est monté articulé sur la ferrure inférieure (104d) par deux deuxièmes points d'articulation (206a-b).

Avec un tel ensemble, la fixation à l'aile est hyperstatique.

## Description

### DOMAINE TECHNIQUE

La présente invention concerne un ensemble pour aéronef comportant des moyens pour fixer une aile à un mât réacteur, ainsi qu'un aéronef comportant une aile et un tel ensemble.

### ÉTAT DE LA TECHNIQUE ANTÉRIEURE

Habituellement, pour un aéronef, un ensemble de propulsion comporte un turboréacteur qui est fixé sous une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur au moyen d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise, fixées d'une part au turboréacteur, et d'autre part à un sabot solidaire de la structure primaire du mât, pour absorber les forces de poussée générées par le turboréacteur.

Un système de fixation lie le mât réacteur à l'aile. Ce système de fixation réagit et absorbe les moments de flexion et les efforts tranchants à l'interface du mât réacteur avec l'aile. Un exemple d'un tel arrangement est décrit dans le document US-A-2016/0221682.

Bien que de tels systèmes de fixation donnent satisfaction, il est souhaitable de trouver des arrangements différents.

### EXPOSÉ DE L'INVENTION

Un objet de la présente invention est de proposer un ensemble pour aéronef comportant des moyens pour fixer une aile à un mât réacteur de manière à obtenir un arrangement hyperstatique.

À cet effet, est proposé un ensemble pour un aéronef comportant une aile avec une structure, ledit ensemble présentant un plan médian vertical et comportant :
- deux ferrures supérieures destinées à être fixées à la structure de l'aile et disposées de part et d'autre du plan médian vertical,
- une ferrure inférieure destinée à être fixée à la structure de l'aile, et
- un mât réacteur présentant une structure primaire formant un caisson et comportant un panneau latéral tribord, un panneau latéral bâbord et un longeron inférieur, où chaque panneau latéral est monté articulé sur la ferrure supérieure qui est du même côté par rapport au plan médian vertical par un premier point d'articulation qui est une rotation autour d'un axe perpendiculaire au plan médian vertical, et où le longeron inférieur est monté articulé sur la ferrure inférieure par deux deuxièmes points d'articulation disposés de part et d'autre du plan médian vertical, où chaque deuxième point d'articulation est une rotation autour d'un axe parallèle à une direction verticale. Avec un tel ensemble, la fixation à l'aile est hyperstatique.

Avantageusement, la ferrure inférieure est constituée de deux sous-ferrures disposées de part et d'autre du plan médian vertical, où chacune est destinée à être fixée à la structure de l'aile et où chacune porte un des deuxièmes points d'articulation.

Avantageusement, chaque premier point d'articulation prend la forme d'une liaison par chape, où une chape femelle est solidaire de la ferrure supérieure correspondante, où une chape mâle est solidaire du panneau latéral correspondant, et où la chape mâle est montée dans ladite chape femelle par l'intermédiaire d'un arbre de chape.

Avantageusement, chaque premier point d'articulation prend la forme d'une liaison par chape, où une chape femelle est solidaire du panneau latéral correspondant, où une chape mâle est solidaire de la ferrure supérieure correspondant, et où la chape mâle est montée dans ladite chape femelle par l'intermédiaire d'un arbre de chape.

Avantageusement, chaque chape femelle est une chape double, chaque chape mâle est une chape double et l'arbre de chape est un arbre double.

Avantageusement, chaque deuxième point d'articulation prend la forme d'une liaison par chape, où une chape femelle est solidaire de la ferrure inférieure, où une chape mâle est solidaire du longeron inférieur et où la chape mâle est montée dans ladite chape femelle par l'intermédiaire d'un arbre de chape.

L'invention propose également un aéronef comportant une aile avec une structure, un turboréacteur et un ensemble selon l'une des variantes précédentes, où les ferrures supérieures sont fixées à la structure de l'aile, où la ferrure inférieure est fixée à la structure de l'aile et où le turboréacteur est fixé sous le mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective et de côté d'un ensemble selon l'invention, et
Fig. 3 est une vue de dessus d'une variante de réalisation de l'invention.

### EXPOSÉ DÉTAILLÉ DE MODES DE RÉALISATION

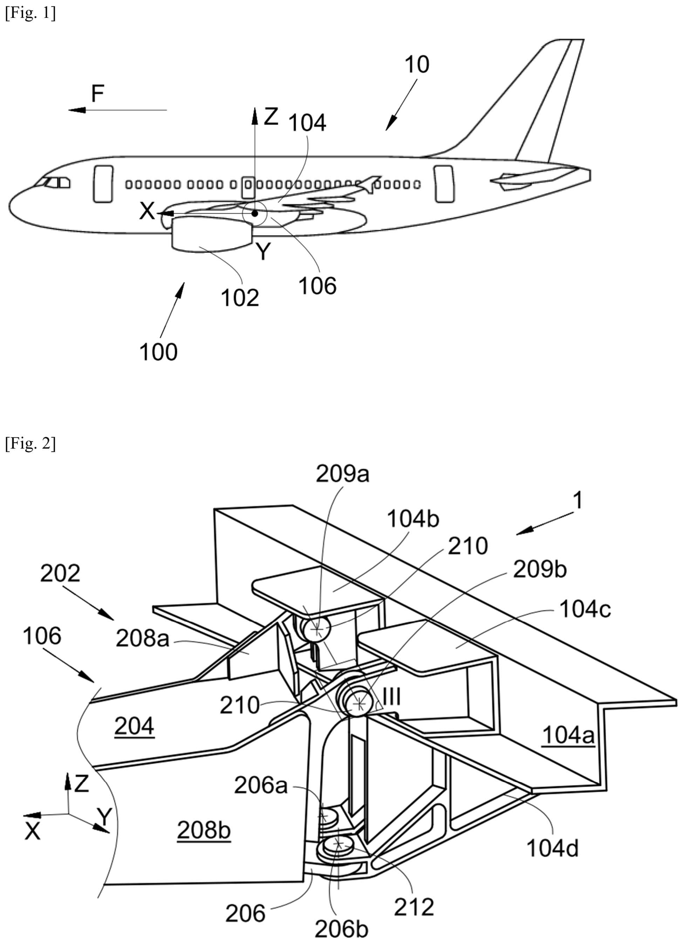

La Fig. 1 montre un aéronef 10 qui comporte un système de propulsion 100 avec un turboréacteur 102 lié à une aile 104 de l'aéronef 10 par l'intermédiaire d'un mât réacteur 106. Le mât réacteur 106 et les moyens de fixation décrits ci-dessous qui assurent la fixation du mât réacteur 106 à l'aile 104 forment un ensemble 1 selon l'invention. Le turboréacteur 102 est fixé sous le mât réacteur 106.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement F de l'aéronef 10 lorsque le turboréacteur 102 fonctionne.

Dans la description qui suit, et par convention, on appelle X, la direction longitudinale de l'ensemble 1 qui est parallèle à l'axe longitudinal du turboréacteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles. Le turboréacteur 102 présente une forme de révolution autour de son axe longitudinal.

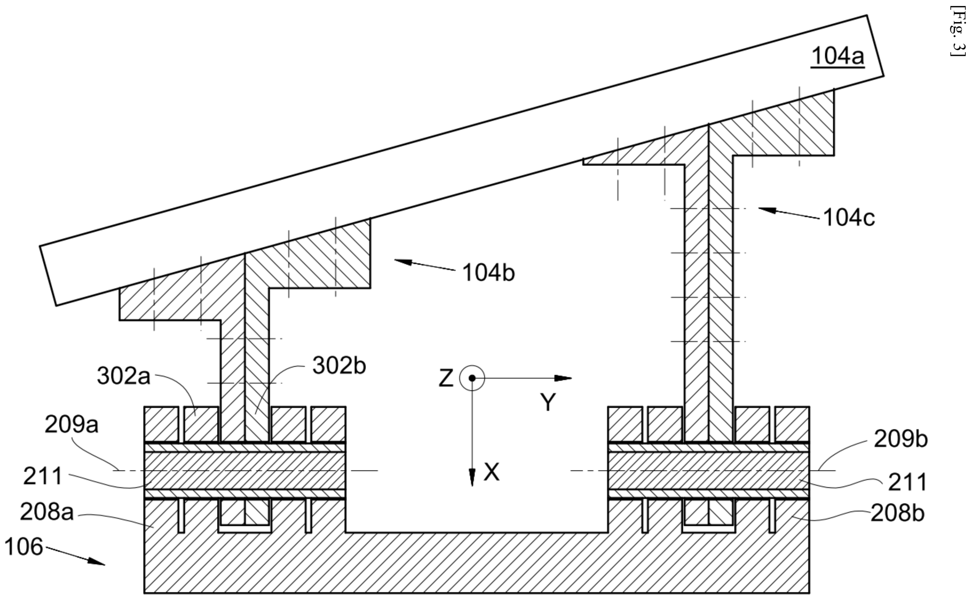

Comme le montrent la Fig. 2 et la Fig. 3, l'aile 104 présente une structure 104a qui est rigide et prend ici la forme de longerons s'étendant le long de la direction transversale Y.

L'ensemble 1 comporte également deux ferrures supérieures 104b-c qui sont fixées à la structure 104a de l'aile 104 et qui sont disposées de part et d'autre du plan médian vertical XZ. L'ensemble 1 comporte également une ferrure inférieure 104d qui est fixée à la structure 104a de l'aile 104. Ces fixations sont assurées par tous moyens appropriés comme des boulons, des points de soudure, ...

En particulier, les fixations des ferrures supérieures 104b-c à la structure 104a de l'aile 104 assurent un transfert des efforts en X et Z, et la fixation de la ferrure inférieure 104d à la structure 104a de l'aile 104 assurent un transfert des efforts en X et Y.

Chaque ferrure supérieure 104b-c prend ici la forme d'un coin fixé à un longeron de la structure 104a de l'aile 104 et plus particulièrement à l'avant du longeron avant.

La ferrure inférieure 104d prend la forme d'une poutre qui s'étend le long de la direction longitudinale X fixée ici plus particulièrement, sous le longeron avant.

Les ferrures supérieures 104b-c sont au-dessus de la ferrure inférieure 104d.

Le mât réacteur 106 comprend une structure rigide 202 formant un caisson et également appelée structure primaire. La structure primaire 202 est formée d'un longeron supérieur 204, d'un longeron inférieur 206, ainsi que d'un panneau latéral tribord 208a et d'un panneau latéral bâbord 208b reliant les deux longerons 204 et 206. La structure primaire 202 peut également comporter des nervures internes réparties à l'intérieur de la structure primaire 202 et liées aux longerons 204 et 206 et aux panneaux latéraux 208a-b, dont une nervure arrière qui ferme le caisson à l'arrière et qui est globalement perpendiculaire à la direction longitudinale X.

La structure primaire 202 est globalement symétrique par rapport à un plan médian vertical XZ de l'ensemble 1 qui s'étend verticalement.

La structure primaire 202 soutient le turboréacteur 102 par l'intermédiaire d'attaches moteur qui peuvent être de conception conventionnelle telles que celles divulguées dans le document US-A-2016/0221682.

La fixation en cascade du turboréacteur 102 au mât réacteur 106 puis à la structure 104a de l'aile 104 assure le transfert des efforts du turboréacteur 102 vers l'aile 104.

La fixation du mât réacteur 106 à l'aile 104 est assurée entre autres par le fait que chaque panneau latéral 208a-b est monté articulé sur la ferrure supérieure 104b-c qui est du même côté par rapport au plan médian vertical XZ. Le panneau latéral tribord 208a est ainsi monté articulé par un premier point d'articulation 209a tribord à la ferrure supérieure 104b tribord et le panneau latéral bâbord 208b est ainsi monté articulé par un premier point d'articulation 209b bâbord à la ferrure supérieure 104c bâbord.

Chaque premier point d'articulation 209a-b est ici une rotation autour d'un axe perpendiculaire au plan médian vertical XZ, c'est-à-dire globalement parallèle à la direction transversale Y.

La fixation du mât réacteur 106 à l'aile 104 est également assurée par le fait que le longeron inférieur 206 est monté articulé sur la ferrure inférieure 104d par deux deuxièmes points d'articulation 206a-b disposés de part et d'autre du plan médian vertical XZ. Le longeron inférieur 206 est ainsi monté articulé par un deuxième point d'articulation 206a tribord à la ferrure inférieure 104d et le longeron inférieur 206 est ainsi monté articulé par un deuxième point d'articulation 206b bâbord à la ferrure inférieure 104d. Les deux deuxièmes points d'articulation 206a-b sont de part et d'autre du plan médian vertical XZ.

Chaque deuxième point d'articulation 206a-b est ici une rotation autour d'un axe parallèle à la direction verticale Z.

Un tel arrangement permet d'obtenir un montage hyperstatique.

Pour des raisons de redondance, la ferrure inférieure 104d peut-être constituée de deux sous-ferrures disposées de part et d'autre du plan médian vertical XZ, où chacune est fixée à la structure 104a de l'aile 104 et où chacune porte un des deuxièmes points d'articulation 206a-b. Dans le mode de réalisation de l'invention présenté à la Fig. 2, chaque premier point d'articulation 209a-b prend la forme d'une liaison par chape. À cette fin, une chape femelle est solidaire de la ferrure supérieure 104b-c correspondante et une chape mâle est solidaire du panneau latéral 208a-b correspondant. La chape mâle est montée dans la chape femelle correspondante par l'intermédiaire d'un arbre de chape 210 parallèle à l'axe de rotation du premier point d'articulation 209a-b correspondant.

Dans la variante de réalisation de l'invention présentée à la Fig. 3, chaque premier point d'articulation 209a-b prend également la forme d'une liaison par chape. Dans cette variante, une chape femelle 302a est solidaire du panneau latéral 208a-b correspondant et une chape mâle 302b est solidaire de la ferrure supérieure 104b-c correspondant. La chape mâle 302b est montée dans la chape femelle 302a correspondante par l'intermédiaire d'un arbre de chape 211 parallèle à l'axe de rotation du premier point d'articulation 209a-b correspondant.

Pour des raisons de redondance en cas de rupture d'un élément de transmission des forces, chaque chape femelle 302a est une chape double, c'est-à-dire avec deux parois de chaque côté et chaque chape mâle 302b est une chape double, c'est-à-dire avec deux éléments distincts fixés indépendamment à la structure 104a de l'aile 104. Chaque ferrure supérieure 104b-c est alors divisée en deux parties, chacune solidaire d'une partie constituant la chape mâle 302b double. Dans cette même variante, l'arbre de chape 211 est un arbre double avec un arbre périphérique qui est cylindrique et creux et un arbre intérieur qui est emmanché dans l'arbre périphérique. Ainsi, en cas de défaillance de l'arbre périphérique, l'arbre intérieur peut prendre le relai.

De manière similaire, chaque deuxième point d'articulation 206a-b prend la forme d'une liaison par chape. Dans cet arrangement, une chape femelle est solidaire de la ferrure inférieure 104d et une chape mâle est solidaire du longeron inférieur 206. La chape mâle est montée dans la chape femelle par l'intermédiaire d'un arbre de chape 212.

## Revendications

1. Ensemble (1) pour un aéronef (10) comportant une aile (104) avec une structure (104a), ledit ensemble (1) présentant un plan médian vertical (XZ) et comportant :
- deux ferrures supérieures (104b-c) destinées à être fixées à la structure (104a) de l'aile (104) et disposées de part et d'autre du plan médian vertical (XZ),
- une ferrure inférieure (104d) destinée à être fixée à la structure (104a) de l'aile (104), et
- un mât réacteur (106) présentant une structure primaire (202) formant un caisson et comportant un panneau latéral tribord (208a), un panneau latéral bâbord (208b) et un longeron inférieur (206), où chaque panneau latéral (208a-b) est monté articulé sur la ferrure supérieure (104b-c) qui est du même côté par rapport au plan médian vertical (XZ) par un premier point d'articulation (209a-b) qui est une rotation autour d'un axe perpendiculaire au plan médian vertical (XZ), et où le longeron inférieur (206) est monté articulé sur la ferrure inférieure (104d) par deux deuxièmes points d'articulation (206a-b) disposés de part et d'autre du plan médian vertical (XZ), où chaque deuxième point d'articulation (206a-b) est une rotation autour d'un axe parallèle à une direction verticale (Z).

2. Ensemble (1) selon la revendication 1, **caractérisé en ce que** la ferrure inférieure (104d) est constituée de deux sous-ferrures disposées de part et d'autre du plan médian vertical (XZ), où chacune est destinée à être fixée à la structure (104a) de l'aile (104) et où chacune porte un des deuxièmes points d'articulation (206a-b).

3. Ensemble (1) selon l'une des revendications 1 ou 2, **caractérisé en ce que** chaque premier point d'articulation (209a-b) prend la forme d'une liaison par chape, où une chape femelle est solidaire de la ferrure supérieure (104b-c) correspondante, où une chape mâle est solidaire du panneau latéral (208a-b) correspondant, et où la chape mâle est montée dans ladite chape femelle par l'intermédiaire d'un arbre de chape (210).

4. Ensemble (1) selon l'une des revendications 1 ou 2, **caractérisé en ce que** chaque premier point d'articulation (209a-b) prend la forme d'une liaison par chape, où une chape femelle (302a) est solidaire du panneau latéral (208a-b) correspondant, où une chape mâle (302b) est solidaire de la ferrure supérieure (104b-c) correspondant, et où la chape mâle (302b) est montée dans ladite chape femelle (302a) par l'intermédiaire d'un arbre de chape (211).

5. Ensemble (1) selon la revendication 4, **caractérisé en ce que** chaque chape femelle (302a) est une chape double, **en ce que** chaque chape mâle (302b) est une chape double et **en ce que** l'arbre de chape (211) est un arbre double.

6. Ensemble (1) selon l'une des revendications 1 à 5, **caractérisé en ce que** chaque deuxième point d'articulation (206a-b) prend la forme d'une liaison par chape, où une chape femelle est solidaire de la ferrure inférieure (104d), où une chape mâle est solidaire du longeron inférieur (206) et où la chape mâle est montée dans ladite chape femelle par l'intermédiaire d'un arbre de chape (212).

7. Aéronef (10) comportant une aile avec une structure (104a), un turboréacteur (102) et un ensemble (1) selon l'une des revendications précédentes, où les ferrures supérieures (104b-c) sont fixées à la structure (104a) de l'aile (104), où la ferrure inférieure (104d) est fixée à la structure (104a) de l'aile (104) et où le turboréacteur (102) est fixé sous le mât réacteur (106).
